# EUROPÄISCHE PATENTSCHRIFT

(11) **EP 1 941 180 B1**
(45) Veröffentlichungstag und Bekanntmachung des Hinweises auf die Patenterteilung: **21.11.2012**
(21) Anmeldenummer: 06805984.9
(22) Anmeldetag: 02.10.2006
(51) Int. Cl.: F16G 11/00, F16C 1/26

(54) **HALTER FÜR LÄNGLICHE, FLEXIBLE OBJEKTE WIE SEILZÜGE**
FIXTURE FOR ELONGATE, FLEXIBLE OBJECTS SUCH AS CONTROL CABLES
DISPOSITIF DE RETENUE POUR DES OBJETS LONGS ET SOUPLES TELS QUE DES CÂBLES

(30) Priorität: 20.10.2005 DE 102005050263
(43) Veröffentlichungstag der Anmeldung: 09.07.2008
(73) Patentinhaber: GM Global Technology Operations LLC, Detroit, MI 48265-3000 (US)
(72) Erfinder: ARNOLD, Johann, 64319 Pfungstadt (DE)
(74) Vertreter: Strauss, Peter
(86) Internationale Anmeldenummer: PCT/EP2006/009539
(87) Internationale Veröffentlichungsnummer: WO 2007/045350

(56) Entgegenhaltungen:
- CH-A- 360 852
- DE-A1- 3 326 223
- US-A- 3 995 512
- US-A- 4 673 151

## Beschreibung

Der Gegenstand der vorliegenden Erfindung betrifft eine Halterung gemäß dem Oberbegriff des Anspruchs 1.

Insbesondere betriff die vorliegende Erfindung einen Halter für längliche, flexible Objekte wie Seilzüge oder Feststellbremszüge in einem Kraftfahrzeug.

Derartige Halter oder Halterungen kommen in Kraftfahrzeugen oder Maschinen zum Einsatz, bei denen flexible, längliche Objekte wie Seilzüge, Seile, Schläuche, Schlauchleitungen, flexible Rohrleitungen etc. geordnet angeordnet werden sollen. Insbesondere soll dadurch verhindert werden, das diese länglichen, flexiblen Objekte lose und/oder beweglich in Bezug auf andere Bauteile in einem Bauraum hängen oder ragen.

Bekannt sind Halterungen, bei denen beispielsweise ein Kabel mittels Kabelbinder an anderen, festen Bauteilen verbunden wird. Dies hat jedoch den Nachteil, das hierdurch keine dauerhaft feste Anordnung gewährleistet ist, und die Anordnung der Kabel individuell von dem Monteur abhängt, wobei Kabelbinder bei Dauerbelastung nicht die gewünschte halterung bieten.

Weiter bekannt sind Halterungen, welche ein Einklipsen eines Seilzugs in krallenartig ausgebildeten Aufnahmevorrichtungen ermöglichen. Das Einklipsen erfolgt im Wesentlichen in eine Richtung, wobei alle Krallen in diese Richtung eine Öffnung aufweisen. Dies hat den Nachteil, dass, da die Krallen das Kabel nur unzureichend umgeben, dieses bei Vibration oder anderen Belastungen, wie sie zum Beispiel beim Gebrauch der Maschine bzw. des Kraftfahrzeugs auftreten, das Seil oder dergleichen in diese Richtung herausspringen kann.

Weiter bekannt sind Lösungen mit einer einzigen Aufnahmevorrichtung, welche eine Durchgangsöffnung aufweist, durch die das Kabel oder das Objekt eingefädelt werden muss, um so eine das Kabel komplett zu umgebene Fläche zu erhalten, oder bei denen die Aufnahmevorrichtung zweiteilig ausgebildet ist, und nach Einführen das Kabels dann beide Teile verbunden werden müssen. Diese Aufnahmevorrichtungen umgeben das zu haltende Objekt zwar komplett, so dass das Kabel axial nicht herausspringen kann jedoch ist zum einen das Einfädeln des Kabels mühsam bzw. bei einer zweiteiligen Ausbildung ist die Herstellung des Aufnahmeteils oder der Aufnahmevorrichtung aufwendig. Zudem wird das Objekt oder Kabel an einer Stelle nur belastet, was bei höheren Belastungen schnell zum Verschleiß des Kabels oder Objektes führen kann.

Aus CH 360 852 A ist eine Halte- und Versteifungseinrichtung für flexible Rohrleitun-gen in Motorfahrzeugen bekannt. Die Rohrleitung wird durch die Zungen hindurchgezogen. Dazu werden die Zungen zuerst aufgebogen. Anschließend wird die Rohrleitung durch die Zungen hindurchgezogen. Danach werden die Zungen um die Rohrleitung herumgebogen.

Es ist daher die Aufgabe der vorliegenden Erfindung, einen Halter zu schaffen, welcher eine leichte Montage des aufzunehmenden Objektes bietet, wobei das aufzunehmende Objekt gegen insbesondere radiales oder quer zur Längsrichtung verlaufendes Herausspringen gesichert ist und welches einfach herzustellen ist.

Diese Aufgabe wird ausgehend von einem Halter gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass bei einer Halterung zum Halten eines länglichen, flexiblen Objektes mit einem Querschnitt, insbesondere zum Halten eines nach Art eines Seilzugs ausgebildeten länglichen flexiblen Objektes, in mindestens eine Raumrichtung vorzugsweise senkrecht zu einem Umfang des Objekts oder normal zur Längsrichtung des Objektes zur Anbindung an ein Kraftfahrzeug umfasst sind: ein mit dem Kraftfahrzeug verbindbarer Grundkörper zum Befestigen der Halterung an mindestens einem Teil des Kraftfahrzeuges und ein mit dem Grundkörper verbundene Aufnahmevorrichtung mit einer das Objekt umfänglich zumindest teilweise kontaktierenden und umgebenden Aufnahmeoberfläche, wobei die Aufnahmeoberfläche sich im Wesentlichen in zwei Richtungen erstreckt, eine erste Erstreckung in im Wesentlichen Längsrichtung des länglichen Objektes und eine zweite Erstreckung in im Wesentlichen umfängliche Richtung des Objektes, wobei mindestens eine weitere mit dem Grundkörper verbundene Aufnahmevorrichtung vorgesehen ist, wobei die Aufnahmeoberflächen zusammen eine umgebende Gesamtaufnahmeoberfläche bilden, welche ein umfängliches, im Wesentlichen radiales Lösen des Objektes aus der Halterung verhindert. Dabei weist die Halterung eine Elastizität auf, die eine Klippverbindung ermöglicht. Weiter sind mindestens drei Aufnahmevorrichtungen an dem Grundkörper vorgesehen. Je mehr Aufnahmevorrichtungen vorhanden sind, wobei jede Aufnahmevorrichtung eine Aufnahmeoberfläche aufweist, desto größer wird die Gesamtoberfläche bei gleicher Größe der Aufnahmeoberflächen.

Die umgebende Aufnahmeoberfläche und/oder die Gesamtaufnahmeoberfläche kontaktieren dabei das aufzunehmende Objekt.

Unter einem Objekt im Sinne der Erfindung lassen sich alle länglichen,
flexiblen Objekte, wie zum Beispiel ein Seilzug, eine Schlauchverbindung, allgemein eine flexible Leitung, der Strang einer Bremse und dergleichen fassen.

An dem Grundkörper sind die Aufnahmevorrichtungen ausgebildet. Dabei sind die Aufnahmevorrichtungen bevorzugt einteilig mit dem Grundkörper ausgebildet, so dass sich der Grundkörper einfach durch Urform oder Umformverfahren herstellen lässt. Beispielsweise kann der Grundkörper gegossen werden oder mittels Stanzen und Biegen hergestellt werden. Der Grundkörper kann grundsätzlich aus jedem Material hergestellt werden, welches die allgemeinen Vorraussetzung für Festigkeit und Dauerhaltbarkeit erfüllt. Insbesondere kann der Grundkörper aus Kunststoff und/oder Metall hergestellt werden. Bevorzugt ist, dass der Grundkörper aus einem Metall oder Stahl hergestellt ist. Um die länglichen Objekte fest anzuordnen, wird der Grundkörper mit dem Kraftfahrzeug, insbesondere mit tragenden Teilen des Kraftfahrzeugs verbunden. Die Verbindung kann allgemein kraft-, form- oder stoffschlüssig ausbildet sein, wobei bevorzugt eine lösbare Verbindung ist. Hierbei kann der Grundkörper mit den Kraftfahrzeugteilen zum Beispiel eines Querträgers mittels bekannter Verbindungsmittel angeordnet werden. Die Aufnahmevorrichtung weist mindestens eine Oberfläche auf, die Aufnahmeoberfläche, welche in Kontakt mit den aufzunehmenden Objekt steht. Hierzu kontaktiert die Aufnahmeoberfläche das aufzunehmende Objekt und umgibt dieses zumindest teilweise. Bei einem teilweise umgeben des aufzunehmenden Objektes weist die Aufnahmevorrichtung gegenüber der Kontaktfläche eine Öffnung auf. Der Halter weist mindestens drei Aufnahmevorrichtungen auf. Die Aufnahmevorrichtungen sind dabei so angeordnet, dass auf der Seite, auf der die eine Aufnahmevorrichtung eine Öffnung aufweist, die andere Aufnahmevorrichtung ihre Kontaktfläche angeordnet hat. Die Aufnahmeoberflächen der Aufnahmevorrichtung bilden zusammen eine Gesamtaufnahmeoberfläche. Durch die entsprechende Anordnung der Aufnahmeoberflächen, welche im Wesentlichen gegenüberliegend sind, ergibt sich eine Gesamtaufnahmeoberfläche, diese Gesamtoberfläche ist so ausgebildet, das ein umfängliches Lösen des Objektes von dem Halter verhindert wird. Unter umfängliches Lösen wird verstanden, dass das Objekt sich nicht quer zur Längsrichtung des Objektes löst. Hierzu umgeben die Aufnahmevorrichtungen in Summe möglichst komplett den Umfang des Objektes. In Winkel umgerechnet wäre dies z.B. bei Objekten mit rundem Querschnitt ein Winkel von etwa 360°. Der Winkel beträgt >= 330°, wobei optimal ein Winkel von etwa 360° ist.

Bevorzugt ist, dass die zweite Erstreckung der Gesamtaufnahmeoberfläche mindestens dem Umfang des Objektes abzüglich der kleinsten Abmessung des Querschnittes des Objektes entspricht. Auf diese Weise ist sichergestellt, dass das aufzunehmende Objekt nicht umfänglich aus der Halterung herausspringt oder herausgelangt. Bei entsprechender Auswahl der Materialien, d. h. bei gegebener Elastizität des Halters ünd/oder des Objektes lässt sich so eine einfache Klippverbindung herstellen. Vorzugsweise entspricht die zweite Erstreckung der Gesamtaufnahmeoberfläche dem gesamten Umfang des aufzunehmenden Objektes, so dass die Gesamtaufnahmeoberfläche komplett das aufzunehmende Objekt umgibt.

Weiter bevorzugt ist, das die zweite Erstreckung mindestens einer Aufnahmeoberfläche wenigstens der Hälfte der zweiten Erstreckung der Gesamtoberfläche entspricht. Bei entsprechender Ausbildung kann schon eine Aufnahmeoberfläche das aufzunehmende Objekt halten. Hierzu wird die Aufnahmevorrichtung so ausgebildet, dass das von der Aufnahmeoberfläche umgebene Aufnahmevolumen gleich oder kleiner ist als das entsprechend dort anzuordnende Volumen des aufzunehmenden Objektes ist, so dass eine Art Presspassung realisiert ist. Bevorzugt ist, das die Aufnahmeoberfläche eine zweite Erstreckung aufweist, die mindestens der Hälfte des Umfang des Objektes entspricht. Durch entsprechende Gestaltung der Passung zwischen Aufnahmevorrichtung und aufzunehmenden Objekt lässt sich so auch eine Sichern in Längsrichtung des Objektes gewährleisten. Je enger die Passung ausgebildet ist, desto mehr wird das Objekt auch gegen Relationsbewegung zur Halterung gesichert.

Bevorzugt ist, dass drei Aufnahmevorrichtungen vorgesehen sind, da hierbei ein optimales Verhältnis zwischen Herstellungsaufwand, Materialeinsatz und Gesamtoberfläche besteht.

Weiter bevorzugt ist, das die Aufnahmeoberflächen so an die Kontur des aufzunehmenden Objektes angepasst sind, dass diese in dem von ihr das Objekt umgebenen Bereich im Wesentlichen vollständig kontaktiert. Hierdurch kann die gesamte Aufnahmeoberfläche wirksam mit dem aufzunehmenden Objekt in Verbindung stehen, wodurch der Materialeinsatz möglichst gering gehalten wird.

Weiter bevorzugt ist, das die Aufnahmeoberflächen ausgebildet sind, ein Objekt aufzunehmen, welches einen Querschnitt aufweist, der im Wesentlichen regelmäßigen geometrischen Formen entspricht, umfassend Kreis-, Quadrat-, Rechteck-, Ellipsen-, Dreieck- und/oder Polygonformen. Hierdurch lässt sich eine größtmögliche Standardisierung erreichen, welche für alle gängigen Formen von aufzunehmenden länglichen Objekten wie Seilzügen etc. entspricht. Vorzugsweise sind die Oberflächen ausgebildet, Objekte mit im Wesentlichen kreisförmigen Querschnitt aufzunehmen. Objekte mit kreisförmigen Querschnitt sind die am weitesten verbreiteten aufzunehmenden länglichen flexiblen Objekte in einem Kraftfahrzeug. Damit ist die Aufnahmeoberfläche ebenfalls im Schnitt kreisförmig bzw. kreisbogenförmig ausgebildet. Insbesondere ist der Schnitt nach Art eines c ausgebildet.

Auch bevorzugt ist es, das die Aufnahmevorrichtungen in Längsrichtung des aufzunehmenden Objektes voneinander beabstandet angeordnet sind. Hierdurch lässt sich die Belastung auf das aufzunehmende Objekt über einen weiter auseinanderliegenden Bereich verteilen. Zu dem lässt sich eine bessere Führung realisieren, da die einzelnen Aufnahmevorrichtungen weiter auseinanderliegen und nicht auf einen Punkt begrenzt sind. Zu dem ist es bevorzugt, das die Aufnahmevorrichtung einteilig an dem Grundkörper nach Art von Laschen ausgebildet sind. Hierdurch lässt sich ein einfaches Herstellverfahren gewährleisten, wobei keine Montageschritte für beispielsweise einer zweiteiligen Aufnahmevorrichtung notwendig sind.

Auch bevorzugt ist es, das der Grundkörper und/oder die Laschen entlang einem Pfad ausgebildet sind. Der Pfad kann in Abhängigkeit von den im Kraftfahrzeug zur Verfügung stehenden Bauraum gewählt werden. Somit lässt sich eine optimale Unterbringung von Grundkörper, Laschen und/oder Objekt ausbilden. Da der Grundkörper an dem Kraftfahrzeug oder an tragenden Teilen des Kraftfahrzeugs befestigt werden muss, kann der Grundkörper gebogen, verdrillt oder anderweitig verformt ausgebildet sein, so dass eine optimale Befestigung mit Verbindungsmitteln an einem oder mehreren tragenden Bauteilen des Autos möglich wird. Ebenfalls entsprechend an dem verformten Grundkörper angepasst, können die Laschen ausgebildet sein. Zu dem lässt sich so ein optimiertes Herstellverfahren realisieren, bei dem Laschen und Grundkörper aufeinander abgestimmt sind. Durch entsprechende Verformung lässt sich der Grundkörper in verschiedenen Kraftfahrzeugvarianten beispielsweise Kombi, Van, Mini-Van, Limousine, Coupe, Sportwagen und dergleichen einsetzen.

Bevorzugt ist, das die Aufnahmevorrichtung nach Art eines rundgebogenen, krallenförmigen Hackens ausgebildet sind. Diese Form, welche insbesondere für Objekte mit kreisförmigen Querschnitt geeignet ist, stellt eine einfach herzustellende Form für eine Aufnahmevorrichtung da.

Weitere die Erfindung verbessernde Maßnahmen sind in den Unteransprüchen angegeben oder werden nachstehend gemeinsam mit der Beschreibung eines oder mehrerer bevorzugter Ausführungsbeispiele der Erfindung anhand der Figuren näher dargestellt. Es zeigt:
- Fig. 1: eine perspektivische Ansicht einer erfindungsgemäßen Halterung mit einem aufgenommenen Objekt und Verbindungsmittel;
- Fig. 2: eine andere perspektivische Ansicht einer erfindungsgemäßen Halterung;
- Fig. 3: perspektivisch eine Halterung in einer weiteren Einbausituation;
- Fig. 4: eine weitere Perspektive auf eine erfindungsgemäße Halterung;

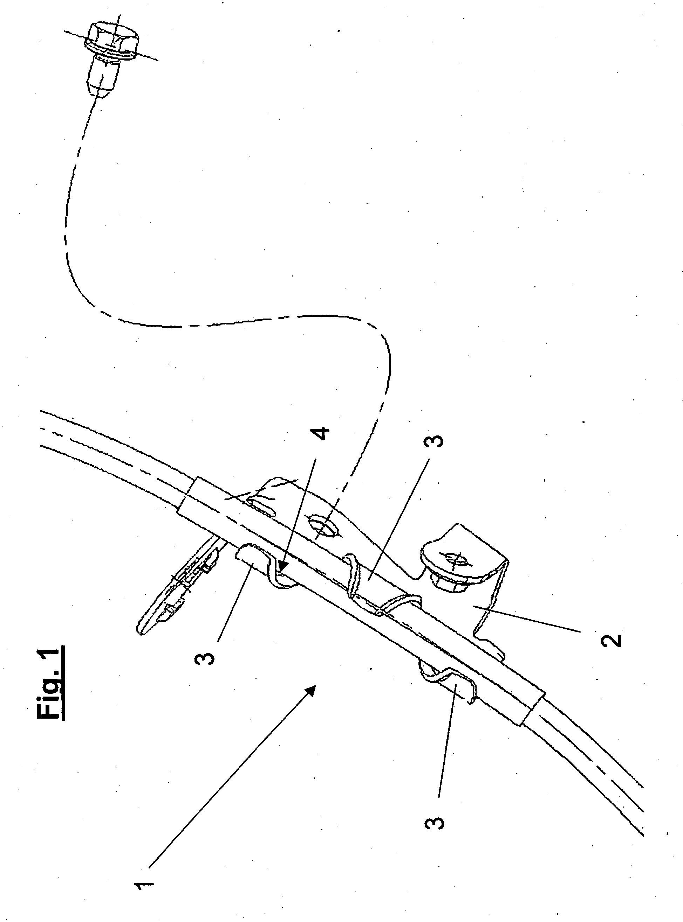

Fig. 1 zeigt in einer perspektivischen Ansicht die erfindungsgemäße Halterung 1. Die Halterung 1 umfasst einen Grundkörper 2 und Aufnahmevorrichtungen 3, welche jeweils dem aufzunehmenden Objekt zugewandt eine Aufnahmeoberfläche 4 aufweisen. Die Halterung 1 ist hier als einteiliges Blechteil oder dünnwandiges Teil ausgebildet. Der Grundkörper 2 weist dabei laschenartige Bereiche auf, mit denen sich die Halterung 1 an weiteren Bauteilen wie tragenden Bauteilen eines Kraftfahrzeugs befestigen lässt. Hier dargestellt weist der Grundkörper Ausnehmungen in Form von mit einem Gewinde versehenen Durchgangslöchern auf. In einem Durchgangsloch ist bereits ein Verbindungsmittel in Form einer Schraube schematisch dargestellt. Zu einem anderen Durchgangsloch ist mittels einem strichpunktiert angedeutetem Pfad ein weiteres Verbindungsmittel zugeordnet. Von dem Grundkörper 2 gehen drei Aufnahmevorrichtungen 3 ab, welche alternierend auf unterschiedlichen Seiten des aufzunehmenden länglichen, flexiblen Objektes, hier als Teil eines im Bereich der Halterung 1 verstärkten Seilzugs dargestellt, angeordnet. Die Aufnahmeoberflächen 4 der Aufnahmevorrichtungen kontaktieren dabei den Umfang des Objektes in einem möglichst großen Bereich in Umfangsrichtung des Objektes. Hierzu erstreckt sich die Aufnahmeoberfläche in eine umfängliche Richtung, das heißt in eine Richtung, die im Wesentlichen in Umfangsrichtung des aufzunehmenden Objektes gerichtet ist, und in ein Längsrichtung, das heißt in eine Richtung, die im Wesentlichen in Längsrichtung des aufzunehmenden Objektes gerichtet ist. Somit wird die Aufnahmeoberfläche 4 im Wesentlichen durch zwei Erstreckungen definiert, durch eine erste Erstreckung in Längsrichtung und eine zweite Längsrichtung in Umfangsrichtung des aufzunehmenden Objektes. Alle Aufnahmeoberflächen 4 in Summe bilden eine Gesamtaufnahmeoberfläche. Diese wird entsprechend durch zwei Erstreckungen aufgespannt, eine erste Erstreckung in Längsrichtung und eine zweite Erstreckung in Umfangsrichtung des aufzunehmenden Objektes. Um ein Lösen des aufzunehmenden Objektes in radiale Richtung des hier mit einem im Wesentlichen kreisförmigen Querschnitts ausgebildeten Objektes zu vermeiden, ist die zweite Erstreckung der Gesamtoberfläche im Wesentlichen gleich dem Umfang des aufzunehmenden Objektes abzüglich der linearen Abmessung des geringsten Querschnitts des aufzunehmenden Objekts. Insgesamt ist auf einen gemeinsamen Querschnitt projiziert der sich bei der Projektion ergebende Umfang, sprich die zweite Erstreckung, in etwa so groß wie der Umfang des Objektes in diesem Querschnitt abzüglich der geringsten Abmessung des Querschnitts.

Durch entsprechende Biegung des Grundkörpers 2 sowie der Aufnahmevorrichtung entlange eines Pfads können die Abmessungen der Erstreckungen jedoch variiert werden, wobei stets ein unbeabsichtigtes Lösen des aufgenommen Objektes senkrecht zur Umfangsrichtung des Objektes vermieden wird.

Die Aufnahmevorrichtungen 3 sind jeweils beabstandet voneinander ausgebildet. Der Abstand ist drei variierbar je nach Einbausituation.

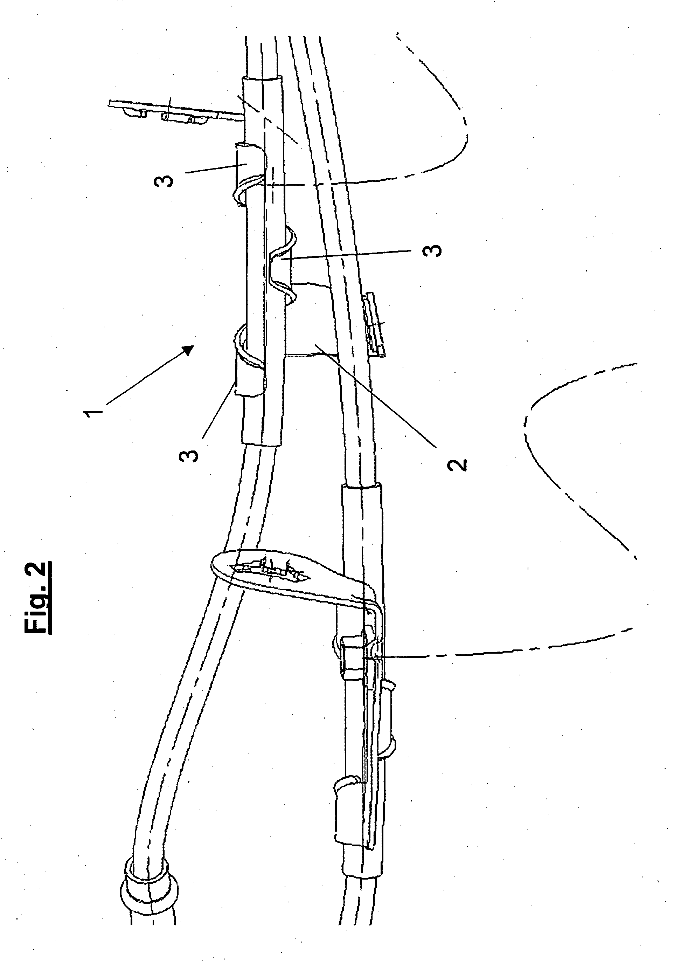

Eine anderen Blick auf die Halterung 1 zeigt Fig. 2.

Fig. 2 zeigt ebenfalls die Halterung 1 mit dem Grundkörper 2 und den daran laschenartig ausgeformten Aufnahmevorrichtungen 3. Der Grundkörper 2 weist zwei im Wesentlichen laschenartig abstehende Vorsprünge zur Befestigung der Halterung 1 an Anschlussteilen auf. Die drei alternierend auf unterschiedlichen Seiten eingreifenden Aufnahmevorrichtungen 3 umgreifen das aufzunehmende Objekt derart, dass dieses etwa in einem Winkel von 360° umgriffen bzw. umgeben ist, würde man eine entsprechend Projektion bilden. Der Bereich in dem der Winkel für ein Umgreifen der Aufnahmevorrichtungen in Bezug auf das Objekt liegt ist oberhalb 330°.

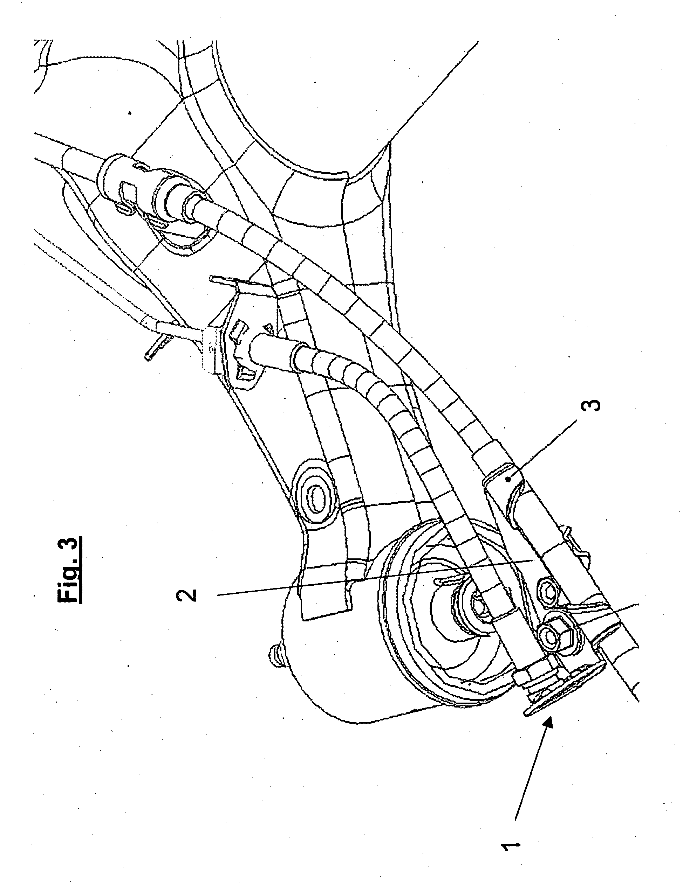

Fig. 3 zeigt eine erfindungsgemäße Halterung 1 mit Grundkörper 2 und Aufnahmevorrichtungen 3 in einer weiteren Einbausituation. Hier ist die Halterung 1 auf engstem Raum angeordnet und entsprechend ausgeformt, um in den vorhandenen engen Einbauraum zu passen.

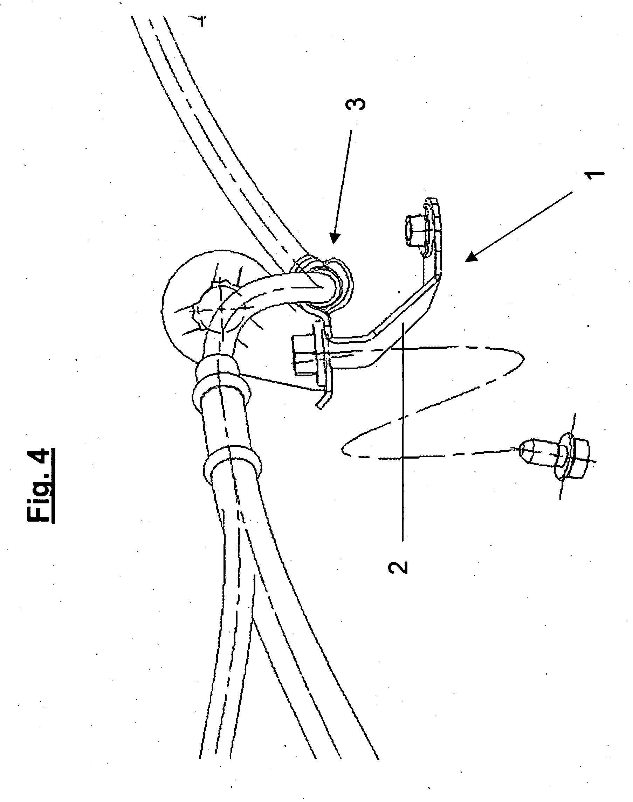

Fig. 4 zeigt eine perspektivische Ansicht im Wesentlichen in Längsrichtung des aufzunehmenden Objektes im Bereich der Halterung 1. Hierbei lässt sich gut erkennen, dass die mit dem Grundkörper 2 einteilig ausgebildeten Aufnahmevorrichtungen das aufzunehmende Objekt fast über den gesamten Umfang umgreifen. In Winkel umgerechnet ergibt sich somit eine Umschließungswinkel von nahezu 360°, mit welchem die Aufnahmevorrichtungen 3 das aufzunehmende Objekt bzw. den Seilzug umschließen.

## Patentansprüche

1. Halterung (1) zum Halten eines länglichen, flexiblen Objektes mit einem Querschnitt, insbesondere zum Halten eines nach Art eines Seilzuges ausgebildeten länglichen, flexiblen Objektes, in mindestens eine Raumrichtung vorzugsweise senkrecht zu einer Umfangsrichtung des Objektes zur Anbindung an ein Kraftfahrzeug, umfassend
einen mit dem Kraftfahrzeug verbindbaren Grundkörper (2) zum Befestigen der Halterung an mindestens einem Teil des Kraftfahrzeuges und
eine mit dem Grundkörper (2) verbundene Aufnahmevorrichtung (3) mit
einer das Objekt umfänglich zumindest teilweise kontaktierenden und umgebende Aufnahmeoberfläche (4), wobei die Aufnahmeoberfläche (4) sich im Wesentlichen in zwei Richtungen erstreckt, eine erste Erstreckung in im Wesentlichen Längsrichtung des länglichen Objektes und eine zweite Erstreckung in im Wesentlichen umfängliche Richtung des Objektes,
wobei mindestens eine weitere mit dem Grundkörper (2) verbundene Aufnahmevorrichtung (3) vorgesehen ist, wobei die Aufnahmeoberflächen (4) zusammen eine kontaktierende und umgebende, ebenfalls erste und zweite Erstreckungen aufweisende Gesamtaufnahmeoberfläche bilden, welche ein senkrecht zur Umfangsrichtung des Objektes, im Wesentlichen radiales Lösen des Objektes aus der Halterung verhindert, wobei
mindestens drei Aufnahmevorrichtungen an dem Grundkörper vorgesehen sind **dadurch gekennzeichnet, dass** die einezlnen Aufnahmeoberflächen (4) zusammen in Summe das Objekt in umfänglicher Richtung mit einem Winkel von wenigstens 330°, bezüglich einer Projektion auf eine Querschnittsfläche senkrecht zur Objets, umgeben und dass die Halterung eine Elastizität aufweist, die eine einfache Klippverbindung ermöglicht.

2. Halterung (1) nach Anspruch 1,
**dadurch gekennzeichnet, dass**
die zweite Erstreckung der Gesamtaufnahmeoberfläche mindestens dem Umfang des Objektes abzüglich der kleinsten Abmessung des Querschnittes des Objektes entspricht.

3. Halterung (1) nach einem der vorherigen Ansprüche 1 bis 2,
**dadurch gekennzeichnet, dass**
die zweite Erstreckung mindestens einer Aufnahmeoberfläche (4) mindestens der Hälfte der zweiten Erstreckung der Gesamtoberfläche entspricht.

4. Halterung (1) nach einem der vorherigen Ansprüche 1 bis 3,
**dadurch gekennzeichnet, dass**
die Aufnahmeoberflächen (4) so an die Kontur des aufzunehmenden Objektes angepasst sind, dass diese in dem von ihr das Objekt umgebenden Bereich das Objekt im Wesentlichen vollständig kontaktiert.

5. Halterung (1) nach einem der vorherigen Ansprüche 1 bis 4,
**dadurch gekennzeichnet, dass**
die Aufnahmeoberflächen (4) ausgebildet sind, ein Objekt aufzunehmen, welches einen Querschnitt aufweist, der im Wesentlichen regelmäßigen geometrischen Formen entspricht umfassend Kreis-, Quadrat-, Rechteck-, Ellipsen-, Dreieck- und/oder Polygon-Form.

6. Halterung (1) nach einem der vorherigen Ansprüche 1 bis 5,
**dadurch gekennzeichnet, dass**
die Aufnahmevorrichtungen (3) in Längsrichtung des aufzunehmenden Objektes voneinander beabstandet angeordnet sind.

7. Halterung (1) nach einem der vorherigen Ansprüche 1 bis 6,
**dadurch gekennzeichnet, dass**
die Aufnahmevorrichtung (3) einteilig an dem Grundkörper (2) nach Art von Laschen ausgebildet sind.

8. Halterung (1) nach einem der vorherigen Ansprüche 1 bis 7,
**dadurch gekennzeichnet, dass**
der Grundkörper (2) und/oder die Laschen entlang einem Pfad ausgebildet sind.

9. Halterung (1) nach einem der vorherigen Ansprüche 1 bis 8,
**dadurch gekennzeichnet, dass**
die Aufnahmevorrichtungen (3) nach Art eines rundgebogenen, krallenförmigen Hakens ausgebildet sind.

## Claims

1. A mount (1) for holding an elongated, flexible object with a cross-section, especially for holding an elongated, flexible object arranged in the manner of a cable pull, in at least one spatial direction preferably perpendicular to a circumferential direction of the object for connection with a motor vehicle, comprising
a base body (2) which can be connected with the motor vehicle for fastening the mount on at least one part of the motor vehicle and
a receiving apparatus (3) which is connected with the base body (2), having
a receiving surface (4) which circumferentially encompasses and is in contact with the object at least in part, with the receiving surface (4) extending substantially in two directions, a first extension in substantially the longitudinal direction of the elongated object and a second extension in substantially the circumferential direction of the object,
with at least one further receiving apparatus (4) being provided, which receiving apparatus (4) is in connection with the base body (2), with the receiving surfaces (4) jointly forming a contacting and enclosing total receiving surface which also has first and second extensions, which total receiving surface prevents a substantially radial detachment of the object from the mount perpendicularly to the circumferential direction of the object, with at least three receiving apparatuses being provided on the base body, **characterized in that** the individual receiving surfaces (4) jointly and totally enclose the object in the circumferential direction under an angle of at least 330° with respect to a projection to a cross-sectional area perpendicularly to the object, and that the mount has an elasticity which enables a simple snap-on connection.

2. A mount (1) according to claim 1, **characterized in that** the second extension of the total receiving surface corresponds to at least the circumference of the object less the smallest dimension of the cross-section of the object.

3. A mount (1) according to one of the preceding claims 1 to 2, **characterized in that** the second extension of at least one receiving surface (4) corresponds to at least half of the second extension of the total surface.

4. A mount (1) according to one of the preceding claims 1 to 3, **characterized in that** the receiving surfaces (4) are adjusted to the contour of the object to be received in such a way that they contact the object substantially completely in the region where they enclose the object.

5. A mount (1) according to one of the preceding claims 1 to 4, **characterized in that** the receiving surfaces (4) are arranged to accommodate an object which has a cross-section which corresponds to substantially regular geometric shapes, comprising the shape of a circle, square, rectangle, ellipse, triangle and/or polygon.

6. A mount (1) according to one of the preceding claims 1 to 5, **characterized in that** the receiving apparatuses (3) are arranged to be spaced from one another in the longitudinal direction of the object to be accommodated.

7. A mount (1) according to one of the preceding claims 1 to 6, **characterized in that** the receiving apparatus (3) is integrally arranged on the base body (2) in the manner of brackets.

8. A mount (1) according to one of the preceding claims 1 to 7, **characterized in that** the base body (2) and/or the brackets are arranged along a path.

9. A mount (1) according to one of the preceding claims 1 to 8, **characterized in that** the receiving apparatuses (3) are arranged in the manner of a circularly bent, claw-like hook.

## Revendications

1. Fixation (1) pour fixer un objet flexible allongé ayant une section, en particulier pour fixer un objet flexible allongé conformé comme un câble de commande, dans au moins une direction de l'espace, de préférence perpendiculairement à un sens de circonférence de l'objet, pour le relier à un véhicule à moteur, comprenant
un corps (2) pouvant être relié au véhicule à moteur pour fixer la fixation sur au moins une partie du véhicule à moteur et
un dispositif de réception (3) relié au corps (2) avec
une surface de réception (4) entourant l'objet et venant au moins partiellement en contact avec sa circonférence, laquelle surface de réception (4) s'étend pour l'essentiel dans deux directions, une première étendue sensiblement dans le sens longitudinal de l'objet allongé et une deuxième étendue sensiblement dans le sens de la circonférence de l'objet,
au moins un autre dispositif de logement (3) relié au corps (2) étant prévu, les surfaces de réception (4) formant ensemble une surface de réception totale en contact et enveloppante, présentant également une première étendue et une deuxième, qui empêche l'objet de se détacher de la fixation perpendiculairement au sens de circonférence de l'objet, sensiblement dans le sens radial,
au moins trois dispositifs de logement étant prévus sur le corps,
**caractérisée en ce que** les différentes surfaces de logement (4) entourent ensemble l'objet dans le sens de la circonférence sur un angle total d'au moins 330° par rapport à une projection sur une aire de section perpendiculaire à l'objet,
et **en ce que** la fixation présente une élasticité qui permet un assemblage par clipsage facile.

2. Fixation (1) selon la revendication 1, **caractérisée en ce que** la deuxième étendue de la surface de réception totale correspond au moins à la circonférence de l'objet moins la plus petite dimension de la section de l'objet.

3. Fixation (1) selon l'une des revendications 1 à 2, **caractérisée en ce que** la deuxième étendue d'au moins une surface de réception (4) correspond au moins à la moitié de la deuxième étendue de la surface totale.

4. Fixation (1) selon l'une des revendications 1 à 3, **caractérisée en ce que** les surfaces de réception (4) sont adaptées au contour de l'objet à recevoir de façon à venir en contact sensiblement complètement avec l'objet dans la zone qu'elles entourent.

5. Fixation (1) selon l'une des revendications 1 à 4, **caractérisée en ce que** les surfaces de réception (4) sont conformées pour recevoir un objet qui présente une section correspondant à des formes géométriques sensiblement régulières comprenant les formes de cercle, de carré, de rectangle, d'ellipse, de triangle et/ou de polygone.

6. Fixation (1) selon l'une des revendications 1 à 5, **caractérisée en ce que** les dispositifs de réception (3) sont disposés à distance les uns des autres dans le sens de la longueur de l'objet à recevoir.

7. Fixation (1) selon l'une des revendications 1 à 6, **caractérisée en ce que** le dispositif de réception (3) est formé d'une pièce sur le corps (2) à la manière de pattes.

8. Fixation (1) selon l'une des revendications 1 à 7, **caractérisée en ce que** le corps (2) et/ou les pattes sont formés le long d'un trajet.

9. Fixation (1) selon l'une des revendications 1 à 8, **caractérisée en ce que** les dispositifs de réception (3) sont conformés comme un crochet arrondi en forme de griffe.
